# EUROPEAN PATENT SPECIFICATION

(11) **EP 3 979 246 B1**
(45) Date of publication and mention of the grant of the patent: **15.10.2025**
(21) Application number: 19931288.5
(22) Date of filing: 31.05.2019
(51) Int. Cl.: G11B 33/02, G11B 33/10, G11B 27/00, G11B 19/20

(54) **OPERATING DEVICE AND PLAYBACK SYSTEM**
BETRIEBSVORRICHTUNG UND WIEDERGABESYSTEM
DISPOSITIF DE COMMANDE ET SYSTÈME DE LECTURE

(43) Date of publication of application: 06.04.2022
(73) Proprietor: AlphaTheta Corporation, Nishi-ku, Yokohama-shi Kanagawa 220-0012 (JP)
(72) Inventor: INOUE Hiroya, Yokohama-shi, Kanagawa 220-0012 (JP); SASAKI Kenji, Yokohama-shi, Kanagawa 220-0012 (JP); TAKAGI Nao, Yokohama-shi, Kanagawa 220-0012 (JP)
(74) Representative: Gille Hrabal Partnerschaftsgesellschaft mbB Patentanwälte
(86) International application number: PCT/JP2019/021834
(87) International publication number: WO 2020/240857

(56) References cited:
- EP-A1- 1 622 151
- EP-A1- 2 085 996
- WO-A1-2018/159730
- JP-A- 2003 233 946
- JP-A- 2005 158 099
- JP-A- 2006 040 471
- JP-A- 2006 099 819
- JP-A- 2009 512 105

## Description

### TECHNICAL FIELD

The present invention relates to an operation device and a playback system.

### BACKGROUND ART

A typical optical disc playback device with an operation unit having a jog dial has been known (for instance, see Patent Literature 1).

An operation unit of an optical disc playback device described in Patent Literature 1 includes a table fixed to a casing, a mat placed on an upper surface of the table, and an operation disc unit placed on an upper surface of the mat with a rotation shaft inserted at a center portion thereof. The operation disc unit is in a form of a disc-shaped jog dial.

An optical sensor is fixed to the casing, detecting a rotation speed and a rotation direction of a scale rotatable with the operation disc unit. In addition, the casing is provided with press detectors or electrostatic capacitance detectors, which are arranged at regular intervals on the same circumference centered on the rotation axis.

In a case where the press detectors are provided, when an operator presses an outer peripheral portion of the operation disc unit, a pressing force causes the table, the mat, and the operation disc unit to sag downward with a switch of the press detector pressed downward by an outer peripheral portion of the table. In response to the switch being pressed downward, a control signal is outputted to a controller of the optical disc playback device.

In a case where the electrostatic capacitance detectors are provided, when an operator touches the outer peripheral portion of the operation disc unit, a change in electrostatic capacitance is detected and a control signal is outputted to the controller of the optical disc playback device.

In the optical disc playback device, input switches may be respectively assigned to a plurality of press-type or electrostatic capacitance-type detectors. In response to the control signal being inputted from the press detectors or capacitance detectors, the controller performs a playback control based on instructions assigned to a detected spot.

### CITATION LIST

### PATENT LITERATURE(S)

Patent Literature 1: US Patent Application Publication No. 2006/0026614

EP 2 085 996 A discloses an operating element for receiving from an operator an instruction about reading speed and reading order of stored data includes: a rotatable operating disc part disposed at one end of a rotation shaft, for receiving a rotation operation by an operator; a sensor substrate part through which the rotation shaft is inserted and having a sensor pattern for detecting capacitance disposed on a surface facing the operating disc part; and a conductive cover part disposed between the operating disc part and the sensor substrate part so as to cover the sensor pattern and to sag when the operating disc part is pressed, the conductive cover part being set to a ground potential.

EP 1 622 151 discloses an optical disc reproducing apparatus reads out data from an optical disc, stores the data, and reproduces the stored data. The apparatus includes: a casing; an operation disc unit which is provided on a surface of the casing, and which accepts an instruction as to a speed and a sequence for reading the stored data via a rotational operation therewith; and depression detecting element which is provided below the operation disc unit and on the surface of the casing, and which accepts an instruction as to a predetermined operation by way of a depression of the operation disc unit.

### SUMMARY OF THE INVENTION

### PROBLEM(S) TO BE SOLVED BY THE INVENTION

Some DJs have a desire to use familiar equipment. For instance, many DJs wish to use record players that are easy to use for them.

However, it is difficult to dispose a press detector or an electrostatic capacitance detector below a turntable of an existing record player as in the optical disc playback device described in Patent Literature 1.

Alternatively, there has been proposed a rotating disc that is placed on a turntable of a record player in use and executes a predetermined processing in response to an operator operating an operation unit exposed outside.

However, such a rotating disc causes the operation unit to rotate centered on a rotation axis of the rotating disc while the rotating disc rotates with the turntable. Disadvantageously, this makes it difficult for an operator to perform an operation on the operation unit due to a difficulty in recognizing a position of the operation unit.

The invention is intended to solve at least a part of the above-described problems and an object thereof is to provide an operation device and a playback system that enable an improvement in operability.

### MEANS FOR SOLVING THE PROBLEM(S)

An operation device according to a first aspect of the invention includes the features of claim 1. Advantageous embodiments are subject matter of the dependent claims.

A playback system according to a second aspect of the invention includes the features of claim 8.

The operation device according to the first aspect and the playback system according to the second aspect enable an operator to transmit operation information irrespective of a rotation state of the rotary body by performing a touch operation on the virtual operation area set in the rotary body. Therefore, the operability of the operation device and the playback system can be improved.

### BRIEF DESCRIPTION OF DRAWING(S)

Fig. 1 schematically shows a configuration of a playback system of an exemplary embodiment.
Fig. 2 is a plan view showing an appearance of an operation unit of the exemplary embodiment.
Fig. 3 schematically shows an internal configuration of the operation unit of the exemplary embodiment.
Fig. 4 shows a position of a virtual operation area of the exemplary embodiment.
Fig. 5 is a block diagram showing a configuration of a controller of the exemplary embodiment.
Fig. 6 is a flowchart showing an operation information transmission process of the exemplary embodiment.

### DESCRIPTION OF EMBODIMENT(S)

An exemplary embodiment of the invention will be described below with reference to the attached drawings.

### Schematic Configuration of Playback System

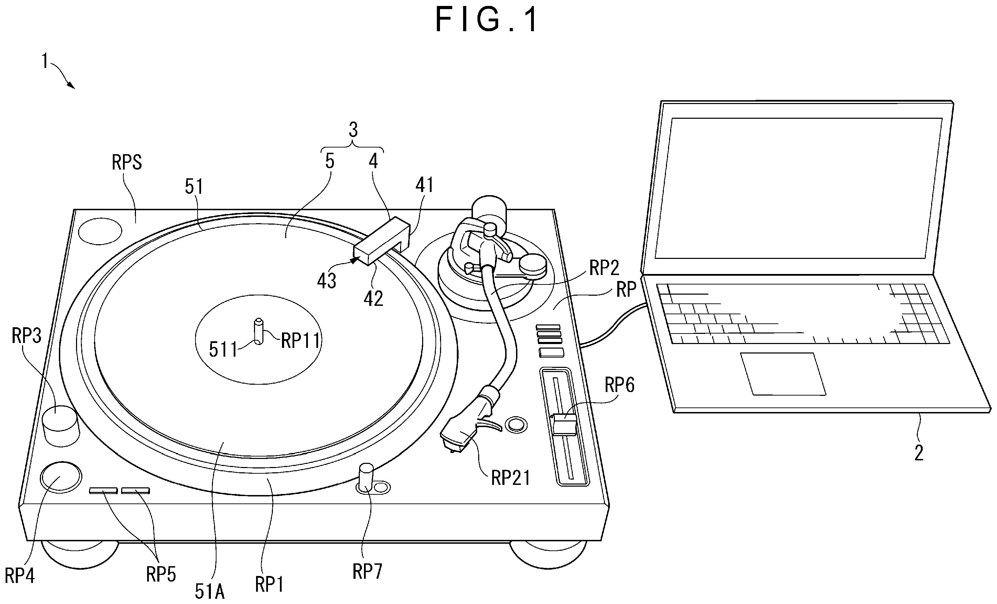

Fig. 1 schematically shows a configuration of a playback system 1 according to the exemplary embodiment.

As shown in Fig. 1, the playback system 1 according to the exemplary embodiment includes a playback device 2 and an operation device 3 including a stationary body 4 and an operation unit 5 provided on a record player RP and plays a music piece in accordance with an operation performed by an operator on the operation unit 5, which is placed on a turntable RP1 of the record player RP.

The components of the playback system 1 will be described below.

### Details of Playback Device

The playback device 2 plays a music piece by playing a piece of music piece data selected by an operator from among pieces of recorded music piece data. In addition to this, the playback device 2 communicates with the operation unit 5 and applies, on the basis of operation information received from the operation unit 5, a variety of acoustic effects to a music piece being currently played. The playback device 2 may be an information processing device such as a PC (Personal Computer).

### Details of Record Player

Here, description will be made on an example of the record player RP where the operation device 3 is provided.

The record player RP, which is configured to play an analog record disc (hereinafter, simply referred to as a record disc), enables an operator to do a DJ performance. The record player RP includes the turntable RP1, a tone arm RP2, a power switch RP3, a start/stop button RP4, a speed change button RP5, a tempo slider RP6, and an illuminator RP7.

The turntable RP1, which is in a circular shape such that a record disc can be placed thereon, is rotatably provided substantially at a middle of a top surface RPS of the record player RP. The turntable RP1 is rotatable by a motor (not shown) housed inside the record player RP.

The tone arm RP2 is provided pivotally on one of corners of the top surface RPS. A head shell RP21 is provided at a distal end of the tone arm RP2. A cartridge equipped with a needle for playing a record disc is attached to a distal end of the head shell RP21.

To play a music piece recorded on a record disc, the turntable RP1 with the record disc placed thereon is rotated at a constant speed and, simultaneously, the needle provided at the distal end of the tone arm RP2 is put on the record disc. In this state, an operator can do a DJ performance such as scratch and pitchbend by normally and reversely rotating the turntable RP1 and/or reducing a rotation speed.

The power switch RP3 and the start/stop button RP4 are provided on a left side of the turntable RP1. An operator can rotate or stop the turntable RP1 by operating the switch RP3 and the button RP4.

The speed change button RP5 is provided on a right side of the start/stop button RP4. An operator can set the rotation speed of the turntable RP1 at 33 RPM, which is suitable for playing an LP disc, or the rotation speed of the turntable RP1 at 45 RPM, which is suitable for playing an EP disc, by operating the speed change button RP5.

The tempo slider RP6 is provided on a right side of the tone arm RP2. An operator can adjust a playback speed of a record disc by operating the tempo slider RP6.

The illuminator RP7 is provided on a right side of an outer peripheral edge of the turntable RP1. The illuminator RP7 illuminates a position where the needle is to be put on a record disc.

### Details of Operation Device

The operation device 3 transmits, to the playback device 2, operation information corresponding to an operation inputted by an operator to the turntable RP1. Specifically, by virtue of the operation unit 5 placed on the turntable RP1, the operation device 3 transmits operation information including rotation information indicating a rotation state of the turntable RP1, that is, rotation information including a rotation angle, rotation direction, and rotation speed of the turntable RP1.

The operation device 3 includes the stationary body 4 and the operation unit 5.

### Details of Stationary Body

The stationary body 4 is removably attached to, within the top surface RPS of the record player RP, a section other than a location of the turntable RP1. In other words, the stationary body 4 is attachable to any position other than the location of the turntable RP1 within the top surface RPS.

The stationary body 4 is formed substantially in an L-shape, including a rising portion 41 rising from the top surface RPS in a normal direction of the top surface RPS and an extending portion 42 bent at a distal end of the rising portion 41 and that has a part covering the turntable RP1 as viewed from a position opposite the top surface RPS.

The stationary body 4 includes a magnetic body 43 inside the extending portion 42. The magnetic body 43 generates a magnetic field that acts on a Hall element 54 provided in the operation unit 5 placed on the turntable RP1.

### Details of Appearance of Operation Unit

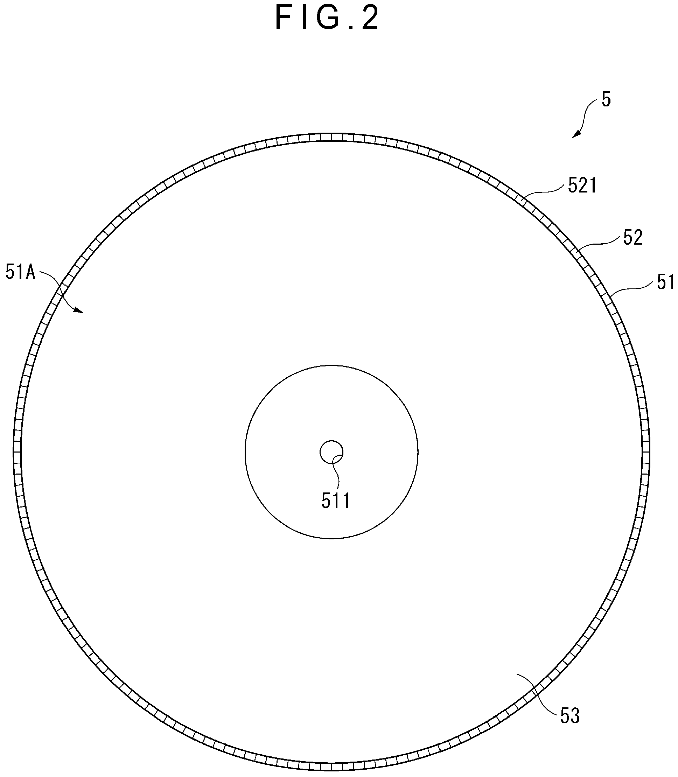

Fig. 2 is a plan view showing an appearance of the operation unit 5.

As shown in Fig. 2, the operation unit 5 includes: a rotary body 51; and an indicator 52 and a touch sensor 53 that are provided on the rotary body 51.

The rotary body 51 is formed in a disc-shape as a record disc. The rotary body 51, which is placed on the turntable RP1 and rotatable with the turntable RP1, is to be directly operated by an operator. It should be noted that a diameter of the rotary body 51 is large sufficient for the part of the extending portion 42 of the stationary body 4 to overlap the rotary body 51 when the rotary body 51 placed on the top surface RPS is viewed from the position opposite the top surface RPS. Specifically, the diameter of the rotary body 51 is substantially the same as a diameter of an LP disc.

The rotary body 51 has, at a middle thereof, a hole 511 that receives a boss RP11 projecting in a middle of the turntable RP1.

The indicator 52, which is annularly provided at an outer edge portion of the disc-shaped rotary body 51, indicates predetermined information under a control of a later-described indication controller 59. For instance, the indicator 52 indicates a later-described virtual operation area VA.

Such an indicator 52 has a configuration where a plurality of light-emitting bodies 521 are arranged concentrically around a rotation axis of the rotary body 51 without any space therebetween. In other words, the indicator 52 includes the plurality of light-emitting bodies 521 arranged concentrically around the rotation axis of the rotary body 51.

It should be noted that the light-emitting bodies 521 may be exemplified by solid light sources such as LEDs. Further, it is more preferable that a lot of light-emitting bodies 521 be centered on a rotation center of the rotary body 51.

The touch sensor 53 corresponds to an operation detector that detects an operation inputted by an operator to the rotary body 51 (i.e., a touch operation). In response to detecting a touch operation performed by an operator, the touch sensor 53 outputs, to a later-described controller 57, a coordinate value corresponding to a touched position in coordinates set in the rotary body 51, that is, a position within the touch sensor 53 where the operator performs the touch operation.

In the exemplary embodiment, the touch sensor 53 is provided in a front surface 51A of the rotary body 51, which is a surface opposite the turntable RP1, substantially all over an area inside relative to the indicator 52 except a center portion. It should be noted that the touch sensor 53 may be any type of a sensor capable of detecting an operation of an operator, such as an electrostatic capacitance sensor, in addition to a sensor that detects press, which means that a sensing scheme of the touch sensor 53 is not limited.

### Internal Configuration of Operation Unit

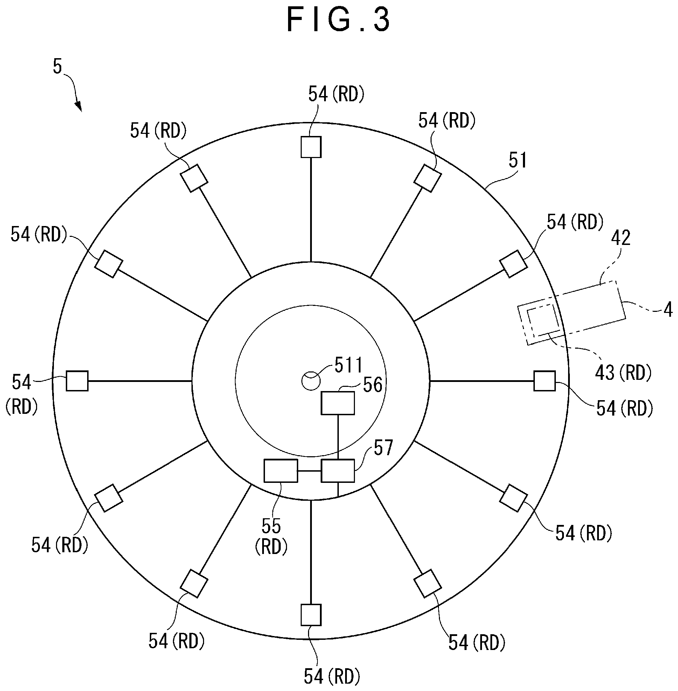

Fig. 3 schematically shows an internal configuration of the operation unit 5.

As shown in Fig. 3, the operation unit 5 includes, in addition to the rotary body 51, the indicator 52, and the touch sensor 53 each described above, the Hall element 54, a gyroscope sensor 55, a communicator 56, and a controller 57, which are provided inside the rotary body 51.

The Hall element 54 defines, in combination with the above-described magnetic body 43, a rotation detector RD that detects a rotation state of the rotary body 51. It means that the operation device 3 includes the rotation detector RD.

A plurality of such Hall elements 54 are provided along an outer edge of the disc-shaped rotary body 51 at regular intervals. In other words, when the rotary body 51 caused to rotate with the turntable RP1 is viewed from the position opposite the top surface RPS, the plurality of Hall elements 54 are provided in an area of the rotary body 51 overlapping the magnetic body 43 along a circumferential direction of the rotary body 51 at regular intervals. Although the number of the Hall elements 54 is 12 in the exemplary embodiment, the number of the Hall elements 54 may be changed, if necessary.

The Hall elements 54 are each individually connected to the controller 57. Further, when approaching the magnetic body 43 by the rotary body 51 being rotated with the turntable RP1, the Hall elements 54 each output an electromotive force, which is generated by the Hall effect in response to reception of a magnetic field generated by the magnetic body 43, to the controller 57.

The gyroscope sensor 55, which detects the rotation state of the rotary body 51 and, consequently, a rotation state of the turntable RP1, defines the rotation detector RD. The gyroscope sensor 55 detects an angular speed in a circumferential direction of the rotary body 51 and, consequently, an angular speed of the turntable RP1. The gyroscope sensor 55 outputs the detected angular speed to the controller 57.

The communicator 56 communicates with the playback device 2 under a control of the controller 57. The communicator 56 transmits, for instance, operation information generated by the controller 57 to the playback device 2. In the exemplary embodiment, communication between the communicator 56 and the playback device 2 is performed by a communication scheme compliant with near field communication standards such as Bluetooth (registered trademark); however, it may be performed by any other communication scheme.

### Functions of Operation Unit

Within the front surface 51A of the rotary body 51 placed on the turntable RP1, at least one virtual operation area is set in a predetermined area of the rotary body 51. The virtual operation area is a virtual area that is in an unchanged position irrespective of whether or not the operation unit 5 is caused to rotate along with the turntable RP1.

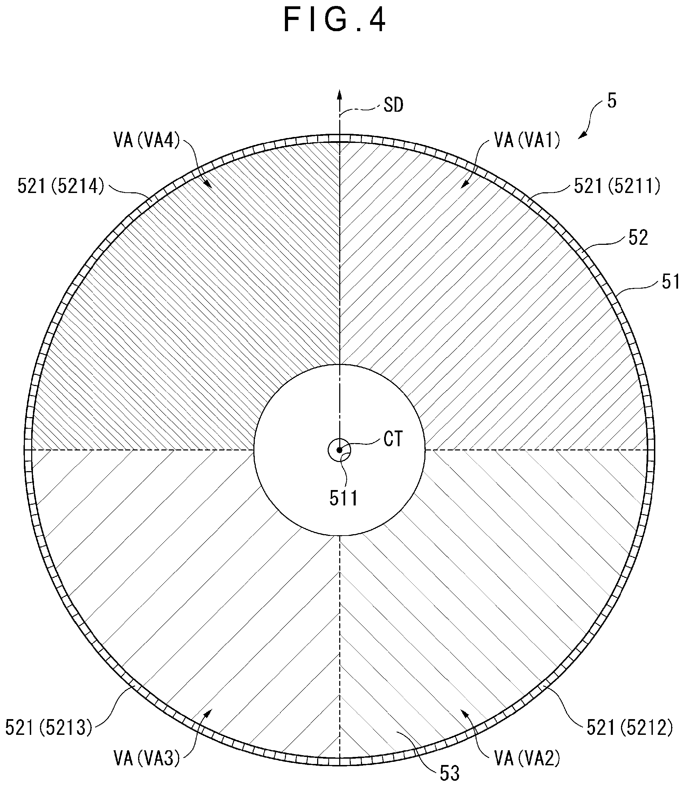

Fig. 4 shows positions of virtual operation areas VA (VA1 to VA4) set in the rotary body 51.

As shown in Fig. 4, in the exemplary embodiment, the four virtual operation areas VA (VA1 to VA4) are set in the front surface 51A. When the rotary body 51 is viewed as a clock face from a predetermined direction by an operator, the virtual operation area VA1 is set corresponding to a range from 0 o'clock to 3 o'clock in a clockwise direction and the virtual operation area VA2 is set over a range from 3 o'clock to 6 o'clock in the clockwise direction. Similarly, the virtual operation area VA3 is set over a range from 6 o'clock to 9 o'clock in the clockwise direction and the virtual operation area VA4 is set over a range from 9 o'clock to 0 o'clock in the clockwise direction. In other words, the virtual operation areas VA1 to VA4 are each set corresponding to a part of a circumference of the rotary body 51 centered on the rotation axis of the rotary body 51.

Further, the operation unit 5 detects, at the touch sensor 53, a touch operation performed by of an operator on the virtual operation areas VA1 to VA4 and transmits, to the playback device 2 through the communicator 56, operation information corresponding to the virtual operation area where the touch operation is performed.

Here, the rotary body 51 is rotated along with the turntable RP1. Accordingly, even though a means of operation, such as a touch pad, is physically disposed at a predetermined section within the front surface 51A, a rotation of the rotary body 51 causes a position of the means of operation to change. For instance, in a case where the means of operation is set at a part of the circumference centered on the rotation axis of the rotary body 51, a 90-degree clockwise rotation of the rotary body 51 causes the position of the means of operation to shift clockwise by 90 degrees with respect to the position of before rotation.

In this case, an operator who is going to perform a touch operation on the means of operation needs to perform the touch operation while following the moving means of operation with his or her eyes. Such an operation is complicated for the operator and becomes a cause for impairing an operability of the operation unit 5 and, consequently, an operability of the operation device 3.

In contrast, the virtual operation areas VA (VA1 to VA4) are set in the front surface 51A of the rotary body 51 as described above and the rotation of the rotary body 51 does not cause the positions of the virtual operation areas VA (VA1 to VA4) to change. Thus, the touch operation can be easily performed on the virtual operation areas VA1 to VA4 even when the rotary body 51 is caused to rotate. Therefore, the operability of the operation unit 5 and, consequently, the operability of the operation device 3 can be improved.

A configuration of the controller 57, which implements such a function, will be described below in detail.

### Configuration of Controller

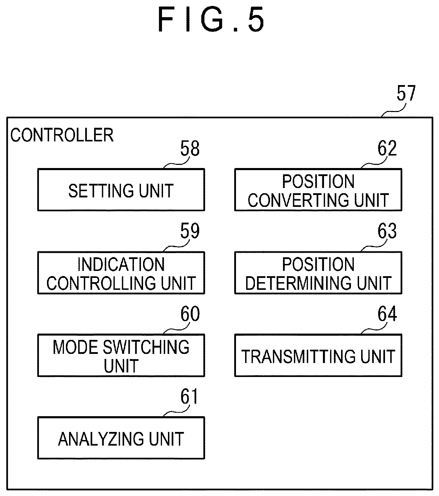

Fig. 5 is a block diagram showing the configuration of the controller 57.

The controller 57, which is a module including a circuit element that is to be driven by an electric power supplied from a battery (not shown), controls a performance of the operation unit 5. As shown in Fig. 5, the controller 57 includes a setting unit 58, an indication controlling unit 59, a mode switching unit 60, an analyzing unit 61, a position converting unit 62, a position determining unit 63, and a transmitting unit 64.

The setting unit 58 sets a reference direction SD with respect to the rotary body 51 and sets the virtual operation areas VA in the front surface 51A.

The reference direction SD is a direction that is a reference for analyzing a rotation angle of the rotary body 51 and, further, a direction that is a reference for setting the virtual operation areas VA. The reference direction SD, which is one of directions perpendicular to the rotation axis of the rotary body 51, corresponds to a 0-o'clock direction in the above-described arrangement of the virtual operation areas VA1 to VA4.

Such a reference direction SD can be set on the basis of, for instance, a position touched by an operator at his/her discretion before the rotation of the rotary body 51. In this case, the setting unit 58 defines, as the reference direction SD, a direction toward the touched position detected by the touch sensor 53 from a center CT of the rotary body 51 in a plan view.

It should be noted that the reference direction SD may be set by another method instead of the above-described setting method. For instance, the setting unit 58 may set the reference direction SD in accordance with a position of one of the Hall elements 54 that is the first to output an electric signal since the rotation of the rotary body 51. In this case, an operator can know the reference direction SD by using the stationary body 4, which includes the magnetic body 43, as a mark.

The setting unit 58 sets the above-described virtual operation areas VA (VA1 to VA4) in the front surface 51A by defining the set reference direction SD as the 0-o'clock direction. At this time, the setting unit 58 sets the virtual operation areas VA (VA1 to VA4) as ranges in the coordinates set in the rotary body 51 of before rotation.

The indication controlling unit 59 causes the indicator 52 to indicate positions of the virtual operation areas VA. In the exemplary embodiment, as shown in Fig. 4, the indication controlling unit 59 causes, among the plurality of light-emitting bodies 521, a light-emitting body 5211 disposed in a range corresponding to the virtual operation area VA1, a light-emitting body 5212 disposed in a range corresponding to the virtual operation area VA2, a light-emitting body 5213 disposed in a range corresponding to the virtual operation area VA3, and a light-emitting body 5214 disposed in a range corresponding to the virtual operation area VA4 to emit respective lights different in color, thereby indicating the respective positions of the virtual operation areas VA1 to VA4.

Further, in order to suppress a shift of the indication of the virtual operation areas VA1 to VA4 along with the rotation of the rotary body 51, the indication controlling unit 59 shifts the indication of the virtual operation areas VA1 to VA4 in an opposite direction to a rotation direction of the rotary body 51 by an amount corresponding to the rotation angle of the rotary body 51 analyzed by the analyzing unit 61. For instance, in response to a 90-degree clockwise rotation from a state where the rotary body 51 has not been rotated, the indication controlling unit 59 causes the indication of the virtual operation areas VA1 to VA4 to rotate anticlockwise by 90 degrees from the state where the rotary body 51 has not been rotated. In this case, the plurality of light-emitting bodies 5214 having shown the virtual operation area VA4 show the virtual operation area VA1, whereas the plurality of light-emitting bodies 5211 having shown the virtual operation area VA1 show the virtual operation area VA2. Further, the plurality of light-emitting bodies 5212 having shown the virtual operation area VA2 show the virtual operation area VA3, whereas the plurality of light-emitting bodies 5213 having shown the virtual operation area VA3 show the virtual operation area VA4.

It means that the indication controlling unit 59 causes, among the plurality of light-emitting bodies 521, a plurality of light-emitting bodies located within a clockwise range from 0 o'clock to 3 o'clock with the rotary body 51 viewed as a clock face from the predetermined direction by an operator to indicate the virtual operation area VA1 irrespective of whether or not the rotary body 51 has been rotated. In other words, the indication controlling unit 59 causes, among the plurality of light-emitting bodies 521, a plurality of light-emitting bodies located within the range corresponding to the virtual operation area VA1 when the rotary body 51 is not rotated, to indicate the virtual operation area VA1.

Likewise, the indication controlling unit 59 causes, among the plurality of light-emitting bodies 521, a plurality of light-emitting bodies located within a clockwise range from 3 o'clock to 6 o'clock with the rotated rotary body 51 viewed as a clock face from the predetermined direction by the operator to indicate the virtual operation area VA2. Further, the indication controlling unit 59 causes, among the plurality of light-emitting bodies 521, a plurality of light-emitting bodies located within a clockwise range from 6 o'clock to 9 o'clock with the rotated rotary body 51 viewed as a clock face from the predetermined direction by the operator to indicate the virtual operation area VA3 and a plurality of light-emitting bodies located within a clockwise range from 9 o'clock to 0 o'clock to indicate the virtual operation area VA1.

This causes the indication of each of the virtual operation areas VA1 to VA4 to be always disposed at the same position irrespective of whether or not the rotary body 51 has been rotated.

The mode switching unit 60 changes an operation mode of the operation unit 5 and, consequently, an operation mode of the operation device 3. For instance, the mode switching unit 60 changes the operation mode in response to a predetermined operation detectable by the touch sensor 53 being performed. In response to the operation mode being changed by the mode switching unit 60, contents of operation information to be transmitted by the later-described transmitting unit 64 are changed.

The analyzing unit 61 analyzes the rotation state of the rotary body 51, that is, the rotation state of the turntable RP1, on the basis of electric signals inputted from the Hall elements 54 and an angular speed inputted from the gyroscope sensor 55. Specifically, the analyzing unit 61 analyzes, as the rotation state of the rotary body 51, the rotation angle, rotation direction, and rotation speed of the rotary body 51.

For instance, the analyzing unit 61 analyzes the rotation direction by analyzing waveforms of the electric signals inputted from the Hall elements 54. For instance, the analyzing unit 61 analyzes the rotation speed on the basis of the number of, among the Hall elements 54 arranged along the circumferential direction of the rotary body 51 at regular intervals, the Hall elements 54 that output electric signals per unit of time.

Likewise, the analyzing unit 61 analyzes the rotation angle of the rotary body 51 with respect to the reference direction SD on the basis of the number of the Hall elements 54 that output electric signals per unit of time. It should be noted that the rotation angle is an angle of the reference direction SD in the rotary body 51 having been rotated relative to the reference direction SD in the rotary body 51 of before rotation. For instance, a 90-degree clockwise rotation of the rotary body 51 from an unrotated state provides a rotation angle of 90 degrees and a further 45-degree clockwise rotation of the rotary body 51 from this state provides a rotation angle of 135 degrees. In contrast, a 90-degree anticlockwise rotation of the rotary body 51 from a state with a rotation angle of 135 degrees provides a rotation angle of 45 degrees.

Further, the analyzing unit 61 can analyze the rotation direction, rotation speed, and the rotation angle of the rotary body 51 on the basis of the angular speed inputted from the gyroscope sensor 55. Accordingly, as for the analysis of the rotation state of the rotary body 51, the operation unit 5 only has to include at least either the Hall elements 54 or the gyroscope sensor 55.

Further, the analyzing unit 61 uses one of the rotation state of the rotary body 51 analyzed on the basis of the electric signals inputted from the Hall elements 54 and the rotation state of the rotary body 51 analyzed on the basis of the angular speed inputted from the gyroscope sensor 55 for error correction of the other rotation state. The analyzing unit 61 can thus analyze the rotation states of the rotary body 51 and the turntable RP1 with a high accuracy.

The position converting unit 62 converts a coordinate value of the touched position detected by the touch sensor 53 to a coordinate value in the coordinates set in the rotary body 51 of before rotation on the basis of the rotation angle of the rotary body 51 analyzed by the analyzing unit 61.

Here, the touch sensor 53 is caused to rotate with the rotary body 51. Thus, even though an operator touches apparently the same position, the coordinate value of the touched position outputted from the touch sensor 53 differs depending on whether the rotation angle of the rotary body 51 is, for instance, 0 degrees or 90 degrees. In other words, a coordinate value outputted in response to a predetermined position being touched in a case where the rotation angle of the rotary body 51 is 0 degrees is the same as a coordinate value outputted in response to a position reached by rotating the predetermined position around the rotation axis of rotary body 51 by 90 degrees, the position being touched, in a case where the rotation angle of the rotary body 51 is 90 degrees. Accordingly, the outputted coordinate value of the touched position is converted to a coordinate value reached by rotation in the opposite direction to the rotation direction of the rotary body 51 by an amount corresponding to the rotation angle of the rotary body 51 and the converted coordinate value is plotted in the coordinates set in the rotary body 51 of before rotation, thereby making it possible to identify which position in the coordinates in the rotary body 51 of before rotation corresponds to the position touched by the operator. In other words, it is determined whether the coordinate value of the converted touched position is within the ranges of the virtual operation areas VA1 to VA4 in the coordinates in the rotary body 51 of before rotation, thereby making it possible to determine whether or not the position touched by an operator is within the virtual operation areas VA1 to VA4.

Accordingly, the position converting unit 62 first acquires, from the analyzing unit 61, the rotation angle of the rotary body 51 relative to the reference direction SD at a timing when the touched position is detected by the touch sensor 53. Then, the position converting unit 62 acquires a coordinate value reached after the coordinate value of the touched position outputted from the touch sensor 53 is rotated around the center CT of the rotary body 51 in the opposite direction to the rotation direction of the rotary body 51 (i.e., anticlockwise) by an amount corresponding to the acquired rotation angle. This causes the coordinate value outputted from the touch sensor 53 to be converted to a coordinate value in the coordinates set in the rotary body 51 of before rotation, that is, a coordinate value at a rotation angle of 0 degrees.

The position determining unit 63 determines whether or not the coordinate value of the touched position converted by the position converting unit 62 is within the range of any one of the virtual operation areas VA1 to VA4 set to the rotary body 51 of before rotation. It means that the position determining unit 63 determines whether or not the position touched by an operator is within the virtual operation areas VA1 to VA4.

The transmitting unit 64 wirelessly transmits a variety of information through the communicator 56. For instance, the transmitting unit 64 transmits, as the rotation information indicating the rotation state of the turntable RP1, operation information including the rotation information indicating the rotation state of the rotary body 51 analyzed by the analyzing unit 61.

The transmitting unit 64 transmits, in response to the touch sensor 53 detecting a touch operation of an operator, operation information including information indicating that the touch operation is performed. At this time, in a case where the touched position is determined to be within any one of the virtual operation areas VA1 to VA4, the transmitting unit 64 transmits operation information including information indicating a current operation mode of the operation unit 5 in addition to information indicating one of the virtual operation areas VA1 to VA4 that includes the touched position.

It should be noted that in the case where the touched position is determined to be within any one of the virtual operation areas VA1 to VA4, the transmitting unit 64 may transmit operation information causing a function set in advance to the virtual operation areas VA1 to VA4 to be performed. For instance, in a case where a function to play a predetermined sound effect is assigned to the virtual operation area VA3, the transmitting unit 64 may transmit, in response to a touch operation (a tap operation) being performed on the virtual operation area VA3, operation information causing the function to be performed.

### Operation Information Transmission Processing Responsive to Touch Operation

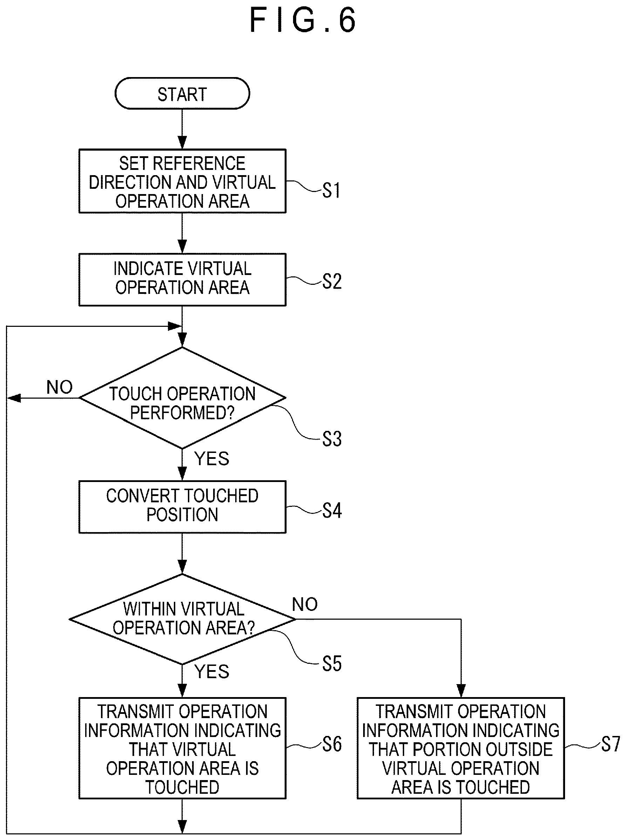

Fig. 6 is a flowchart showing an operation information transmission processing to be performed by the controller 57.

The controller 57 performs the operation information transmission processing shown in Fig. 6 by virtue of the above-described configuration, thereby setting the predetermined areas in the rotary body 51 as the virtual operation areas VA and transmitting, in response to the virtual operation areas VA being touched, predetermined operation information. The operation information transmission processing is performed by the controller 57 performing an operation information transmission program stored in a storage (not shown). The operation information transmission processing includes an operation determination process to determine whether or not an input operation (a touch operation) is performed on the virtual operation areas VA by an operator.

In the operation information transmission processing, the setting unit 58 first sets the reference direction SD with respect to the rotary body 51 of before rotation and sets the virtual operation areas VA with reference to the set reference direction SD (Step S1).

Next, the indication controlling unit 59 causes the indicator 52 to indicate the set virtual operation areas VA (Step S2). As described above, the indication controlling unit 59 causes, in response to the rotation of the rotary body 51, the indication of the virtual operation areas VA to shift in accordance with the rotation angle of the rotary body 51.

Subsequently, the controller 57 determines whether or not a touch operation is performed by an operator (Step S3).

In response to determining that no touch operation is performed in the determination process in Step S3 (Step S3: NO), the controller 57 returns to the process in Step S3, repeating Step S3 until a touch operation is performed.

In response to the controller 57 determining that a touch operation is performed in the determination process in Step S3 (Step S3: YES), the position converting unit 62 converts a coordinate value indicating the touched position on the basis of the rotation angle of the rotary body 51 analyzed by the analyzing unit 61 (Step S4).

Subsequently, the position determining unit 63 determines whether or not the converted coordinate value is within the ranges of the virtual operation areas VA in the coordinates in the rotary body 51 of before rotation (Step S5).

In response to the coordinate value being determined to be within the virtual operation areas VA in the determination process in Step S5 (Step S5: YES), the transmitting unit 64 transmits operation information including information indicating touched one of the virtual operation areas VA1 to VA4 and information indicating the current operation mode of the operation unit 5 (Step S6). At this time, the transmitting unit 64 may further include rotation information indicating the rotation state of the rotary body 51 in the operation information to be transmitted.

The playback device 2, which receives such operation information, performs a function set to the virtual operation area VA in accordance with the operation mode of the rotary body 51.

In response to the coordinate value being determined to be not within the virtual operation areas VA in the determination process in Step S5 (Step S5: NO), the transmitting unit 64 transmits operation information indicating that a portion outside the virtual operation areas VA is touched (Step S7). At this time, the transmitting unit 64 may further include rotation information indicating the rotation state of the rotary body 51 in the operation information to be transmitted.

In this case, the playback device 2, which receives the operation information, determines that, for instance, a rotating operation such as a scratch operation is performed on the rotary body 51 and performs a process such as changing a playback direction and/or a playback speed of music piece data in accordance with the operation.

In response to Steps S6 and S7 being performed, the controller 57 returns to the process in Step S3, getting ready for a next touch operation.

The operation information transmission processing is repeatedly performed in this manner until a predetermined exit operation is performed such as the operation unit 5 being turned off.

### Effects of Exemplary Embodiment

The playback system 1 according to the exemplary embodiment described above can achieve the following effects.

The operation device 3, which defines the playback system 1, includes the rotary body 51, the virtual operation areas VA (VA1 to VA4), the touch sensor 53 serving as the operation detector, and the controller 57. The rotary body 51 is placed on the turntable RP1 of the record player RP and caused to rotate along with the turntable RP1. The virtual operation areas VA (VA1 to VA4), that is, virtual operation areas set in the rotary body 51, are virtual areas the positions of which in the rotary body 51 are the same irrespective of whether the rotary body 51 is caused to rotate or the rotary body 51 is not caused to rotate. The touch sensor 53 detects a position of a touch operation, which is an input operation performed on the rotary body 51, namely, a touched position. In a case where the touched position detected by the touch sensor 53 is within the virtual operation areas VA (VA1 to VA4), the transmitting unit 64 of the controller 57 transmits the predetermined operation information.

The playback system 1 also includes the above-described operation device 3 and the playback device 2 that plays music piece data. The playback device 2 applies an acoustic effect to the music piece data currently played on the basis of the operation information received from the operation device 3.

By virtue of such a configuration, the positions of the virtual operation areas VA in the rotary body 51 are the same irrespective of whether the rotary body 51 is caused to rotate or not caused to rotate. Thus, in performing a touch operation on the virtual operation areas VA, an operator does not need to follow the virtual operation areas in the rotated rotary body 51 with his or her eyes to touch them. This makes it possible to transmit the predetermined operation information irrespective of the rotation state of the rotary body 51. Therefore, the operability of the operation device 3 and, consequently, the operability of the playback system 1 can be improved.

The virtual operation areas VA are each set corresponding to a part of the circumference centered on the rotation axis of the rotary body 51. In other words, the virtual operation areas VA1 to VA4 are each not set in an annular shape centered on the rotation axis of the rotary body 51.

Such a configuration can make it easier to set the plurality of virtual operation areas VA (VA1 to VA4) in the front surface 51A of the rotary body 51. In addition to this, an operator can easily recognize the positions of the plurality of virtual operation areas VA (VA1 to VA4), so that an erroneous touch can be reduced.

The operation device 3 includes the rotation detector RD that detects the rotation angle of the rotary body 51 with respect to the reference direction SD. The controller 57 includes the position converting unit 62 and the transmitting unit 64.

The position converting unit 62 converts the coordinate value of the touched position detected by the touch sensor 53 to a coordinate value in the rotary body 51 of before rotation on the basis of the rotation angle of the rotary body 51 detected at the timing when a touch operation is performed. In response to the position determining unit 63 determining that the coordinate value converted by the position converting unit 62 is within the virtual operation areas VA in the rotary body 51 of before rotation, the transmitting unit 64 transmits the operation information including the information indicating that a touch operation is performed on the virtual operation areas VA.

Such a configuration makes it possible to appropriately determine whether or not the touched position on the rotary body 51 is within the virtual operation areas VA even though the rotary body 51 is caused to rotate. The operation information can thus be appropriately transmitted.

The touch sensor 53 provided in the rotary body 51 is an operation detector that detects an input operation, that is, a touch operation, performed by an operator. The position converting unit 62 converts the coordinate value of the touched position detected by the touch sensor 53 on the basis of the rotation angle of the rotary body 51.

Such a configuration makes it possible to dispose the operation detector over a relatively large range in the rotary body 51 and, further, detect the touch operation performed by the operator with accuracy.

The plurality of virtual operation areas VA are provided in the rotary body 51. The transmitting unit 64 of the controller 57 transmits the operation information corresponding to, among the virtual operation areas VA1 to VA4, the virtual operation area VA where the touch operation is performed. In the exemplary embodiment, the operation information to be transmitted in response to one of the virtual operation areas VA being touched includes information indicating the touched virtual operation area VA.

Such a configuration makes it possible for the playback device 2, which is external equipment that receives the operation information, to perform a process and a function corresponding to the touched virtual operation area VA among the virtual operation areas VA1 to VA4. The operation device 3 can thus be improved in versatility.

The controller 57 includes the mode switching unit 60 that switches the operation mode of the operation device 3. The transmitting unit 64 transmits the operation information corresponding to the operation mode.

By virtue such a configuration, the operation mode is switched by the mode switching unit 60, thereby making it possible to cause the playback device 2, which is external equipment that receives the operation information, to perform different processes and functions for different operation modes even though an operator performs the same operation on the operation device 3. The operation device 3 can thus be improved in versatility.

The operation device 3 includes the indicator 52 provided in the rotary body 51 and that indicates the positions of the virtual operation areas VA (VA1 to VA4) and the indication controlling unit 59 that causes the indication of the virtual operation areas VA (VA1 to VA4) in the indicator 52 to shift on the basis of the rotation angle of the rotary body 51.

By virtue of such a configuration, the indication of the virtual operation areas VA1 to VA4 shows constant positions even though the rotary body 51 is caused to rotate. This allows an operator to easily identify the positions of the virtual operation areas VA1 to VA4. Therefore, the operability of the operation device 3 can be improved.

It should be noted that in the above-described exemplary embodiment, manners of indicating the virtual operation areas VA differ among the virtual operation areas VA1 to VA4, which can make it possible for an operator to identify the respective positions of the virtual operation areas VA1 to VA4.

### Modifications of Exemplary Embodiment

In the above-described exemplary embodiment, the four virtual operation areas VA are provided. However, the number of the virtual operation areas VA is not limited to the above, but may be three or more or five or more. Further, a shape of the virtual operation area VA is not limited to a fan shape, but may be any other shape such as a rectangular shape or a round shape. For instance, the virtual operation area VA may be set in an annular shape centered on the center CT aligned with the rotation axis of the rotary body 51. In this case, in a case where a plurality of virtual operation areas VA are provided, the virtual operation areas VA may be set concentrically around the center CT.

Alternatively, the virtual operation area VA is not necessarily set over the entire circumference centered on the rotation axis of the rotary body 51 and an area that is not the virtual operation area VA may be set at a part of the circumference of the rotary body 51. Further, the virtual operation area VA may be set on one of an inner side and an outer side in the front surface 51A of the rotary body 51, whereas an area that is not the virtual operation area VA may be set on the other side.

Additionally, at least one of the number, shape, or location of the virtual operation area VA may be configured to be set by an operator. For instance, an area selected by an operator in the front surface 51A of the rotary body 51 of before rotation may be detected by the touch sensor 53 and set as the virtual operation area VA.

In the above-described exemplary embodiment, the rotation detector RD includes the magnetic body 43, the Hall element 54 and the gyroscope sensor 55. However, the configuration of the rotation detector RD is not limited to the above, but may include only either the magnetic body 43 and the Hall element 54 or the gyroscope sensor 55.

In the above-described exemplary embodiment, the position converting unit 62 converts the coordinate value of the touched position on the rotary body 51 being rotated to a coordinate value in the coordinates set in the rotary body 51 of before rotation. Then, in response to the converted coordinate value being within the virtual operation area VA in the rotary body 51 of before rotation, the transmitting unit 64 transmits the operation information including the information indicating that the touch operation is performed on the virtual operation area VA. However, the operations of the position converting unit 62 and the transmitting unit 64 are not limited to the above. For instance, the position converting unit 62 may convert coordinate values in the virtual operation area set in the rotary body 51 of before rotation to coordinate values after rotation in accordance with the rotation angle of the rotary body 51. In this case, in response to the coordinate value of the touched position outputted from the touch sensor 53 being included in the converted coordinate values in the virtual operation area, the transmitting unit 64 may transmit operation information similar to the above. It means that a conversion target to which a coordinate value is to be converted by the position converting unit 62 may be either a touched position in the rotary body 51 having been rotated or the virtual operation area in the rotary body 51 of before rotation.

In the above-described exemplary embodiment, the touch sensor 53 is used as the operation detector that detects a position touched by an operator. However, the operation detector is not limited to the above, but any other component that can fulfill a function as the operation detector is usable as the operation detector.

Further, the touch sensor 53 is provided substantially all over the front surface 51A of the rotary body 51. However, the touch sensor 53 is not limited to the above, but may be provided only at a part of the front surface 51A or in a side surface of the rotary body 51. In this case, the operation detector may be in the form of a switch instead of a touch sensor.

In the above-described exemplary embodiment, the controller 57 includes the mode switching unit 60 that switches the operation mode of the operation unit 5 and, consequently, the operation mode of the operation device 3. However, the mode switching unit 60 is not limited to the above, but may be omittable. Alternatively, switching of the mode of the operation device 3 may be performed by the playback device 2, that is, external equipment that receives the operation information. In this case, the process and the function to be performed in accordance with the operation information may be switched by the playback device 2 and the changed operation mode may be transmitted from the playback device 2 to the operation unit 5 of the operation device 3.

In the above-described exemplary embodiment, the operation unit 5 of the operation device 3 includes the indicator 52 that indicates the virtual operation area VA in the rotated rotary body 51. However, the indicator 52 is not limited to the above, but may be omittable. Further, the position of the indicator 52 in the front surface 51A and the configuration of the indicator 52 are not limited to the above. In addition, the indication of the virtual operation area VA by the indicator 52 can be changed, if necessary.

In the above-described exemplary embodiment, the transmitting unit 64 transmits the operation information corresponding to the touched virtual operation area VA. In addition to this, the transmitting unit 64 may transmit, in response to a plurality of the virtual operation areas VA being simultaneously touched (multi-touched), the operation information that causes a predetermined function to be performed. Further, in response to one of the virtual operation areas VA being touched for a plurality of times, the contents of the operation information to be transmitted may be changed and/or the contents of the operation information to be transmitted may be changed in accordance with a length of a touch time.

In the above-described exemplary embodiment, the turntable RP1, on which the rotary body 51 of the operation unit 5 that forms the operation device 3 is placed, is provided in the record player RP as a turntable that rotates a record disc. However, the turntable on which the rotary body is placed according to the invention is not limited to a turntable that rotates a record disc and may be a turntable for any other use, such as a steering for an automobile or the like.

Further, the operation device according to the invention is not necessarily configured to transmit operation information to the playback device 2 that plays music piece data and may be configured to transmit operation information to any other device and equipment.

### EXPLANATION OF CODE(S)

1... playback system, 2... playback device, 3...operation device, 4... stationary body, 43... magnetic body, 5... operation unit, 51... rotary body, 52... indicator, 53...touch sensor (operation detector), 54... Hall element, 55... gyroscope sensor, 56... communicator, 57... controller, 58... setting unit, 59... indication controlling unit, 60... mode switching unit, 61...analyzing unit, 62... position converting unit, 63... position determining unit, 64...transmitting unit, RD... rotation detector, RP1...turntable, VA (VA1 to VA4)...virtual operation area

## Claims

1. An operation device (3) comprising:
a rotary body (51) placed on a turntable (RP1) and rotatable with the turntable (RP1); the turntable (RP1) is configured to rotate by a motor;
a virtual operation area (VA) set on the rotary body (51) and that is a virtual area a position of which in the rotary body (51) is the same irrespective of whether the rotary body (51) is caused to rotate or not caused to rotate;
an operation detector (53) provided on the rotary body (51) and configured to detect a coordinate value of a touched position that is a position where a touch operation is performed on the rotary body (51); and
a controller (57) configured to transmit predetermined operation information when the coordinate value of the touched position detected by the operation detector (53) is a position corresponding to a range of the virtual operation area (VA) in the rotary body (51).

2. The operation device (3) according to claim 1, wherein
the virtual operation area (VA) is set corresponding to a part of a circumference centered on a rotation axis of the rotary body (51).

3. The operation device (3) according to claim 1 or 2, further comprising:
a rotation detector (RD) configured to detect a rotation angle of the rotary body (51) relative to a reference direction, wherein
the controller (57) comprises:
a position converting unit (62) configured to convert the coordinate value of the touched position detected by the operation detector (53) to a coordinate value in the rotary body (51) of before rotation on a basis of the rotation angle detected by the rotation detector (RD) at a timing when the touch operation is performed; and
a transmitting unit (64) configured to transmit the operation information in a case where the coordinate value converted by the position converting unit (62) is within the virtual operation area (VA) in the rotary body (51) of before rotation, the operation information comprising information indicating that the touch operation is performed on the virtual operation area (VA).

4. The operation device (3) according to claim 3, further comprising:
an indicator (52) provided on the rotary body (51) and configured to indicate a position of the virtual operation area (VA); and
an indication controlling unit (59) configured to cause indication of the virtual operation area (VA) in the indicator (52) to shift on a basis of the rotation angle detected by the rotation detector (RD).

5. The operation device (3) according to claim 3 or 4, wherein
the operation detector (53) comprises a touch sensor provided on the rotary body (51), and
the position converting unit (61) is configured to convert the coordinate value of the touched position detected by the touch sensor on a basis of the rotation angle.

6. The operation device (3) according to any one of claims 1 to 5, wherein
a plurality of the virtual operation areas (VA) are provided on the rotary body (51), and
the controller (57) is configured to transmit the operation information corresponding to, among the plurality of virtual operation areas (VA1 to VA4), the virtual operation area where the touch operation is performed.

7. The operation device (3) according to any one of claims 1 to 6, further comprising:
a mode switching unit (60) configured to switch an operation mode of the operation device (3), wherein
the controller (57) is configured to transmit the operation information corresponding to the operation mode.

8. A playback system (1) comprising:
the operation device (3) according to any one of claims 1 to 7; and
a playback device (2) configured to play music data, the playback device (2) being configured to apply an acoustic effect to the music data currently played based on the operation information received from the operation device (3).

## Patentansprüche

1. Eine Betätigungsvorrichtung (3) umfassend:
einen Drehkörper (51), der auf einer Drehscheibe (RP1) angeordnet und mit der Drehscheibe (RP1) drehbar ist; wobei die Drehscheibe (RP1) dazu eingerichtet ist, sich durch einen Motor zu drehen;
einen virtuellen Betätigungsbereich (VA), der auf dem Drehkörper (51) festgelegt ist und einen virtuellen Bereich darstellt, dessen Position in dem Drehkörper (51) unabhängig davon, ob der Drehkörper (51) veranlasst wird, sich zu drehen oder nicht, gleich bleibt;
einen Betätigungsdetektor (53), der auf dem Drehkörper (51) angeordnet und dazu eingerichtet ist, einen Koordinatenwert einer berührten Position zu detektieren, die eine Position ist, an der eine Berührungsbetätigung an dem Drehkörper (51) durchgeführt wird; und
eine Steuerung (57), die dazu eingerichtet ist, vorbestimmte Betätigungsinformationen zu übertragen, wenn der durch den Betätigungsdetektor (53) detektierte Koordinatenwert der berührten Position eine Position ist, die einem Bereich des virtuellen Betätigungsbereichs (VA) im Drehkörper (51) entspricht.

2. Die Betätigungsvorrichtung (3) gemäß Anspruch 1, wobei
der virtuelle Betätigungsbereich (VA) entsprechend einem Teil eines auf eine Drehachse des Drehkörpers (51) zentrierten Umfangs festgelegt ist.

3. Die Betätigungsvorrichtung (3) gemäß Anspruch 1 oder 2, ferner umfassend:
einen Rotationsdetektor (RD), der dazu eingerichtet ist, einen Drehwinkel des Drehkörpers (51) relativ zu einer Referenzrichtung zu detektieren, wobei
die Steuerung (57) umfasst:
eine Positionsumwandlungseinheit (62), die dazu eingerichtet ist, den Koordinatenwert der vom Betätigungsdetektor (53) detektierten berührten Position in einen Koordinatenwert im Drehkörper (51) von vor der Drehung auf der Grundlage des vom Rotationsdetektor (RD) detektierten Drehwinkels zu einem Zeitpunkt umzuwandeln, zu dem die Berührungsbetätigung durchgeführt wird; und
eine Übertragungseinheit (64), die dazu eingerichtet ist, die Betätigungsinformation in einem Fall zu übertragen, in dem der von der Positionsumwandlungseinheit (62) umgewandelte Koordinatenwert innerhalb des virtuellen Betätigungsbereichs (VA) im Drehkörper (51) von vor der Drehung liegt, wobei die Betätigungsinformation eine Information umfasst, die angibt, dass die Berührungsbetätigung am virtuellen Betätigungsbereich (VA) durchgeführt wird.

4. Die Betätigungsvorrichtung (3) gemäß Anspruch 3, ferner umfassend:
eine Anzeige (52), die auf dem Drehkörper (51) angeordnet und dazu eingerichtet ist, eine Position des virtuellen Betätigungsbereichs (VA) anzuzeigen; und
eine Anzeige-Steuereinheit (59), die dazu eingerichtet ist, ein Angezeigtwerden des virtuellen Betätigungsbereichs (VA) in der Anzeige (52) auf der Grundlage des vom Rotationsdetektor (RD) detektierten Drehwinkels zu verschieben.

5. Die Betätigungsvorrichtung (3) gemäß Anspruch 3 oder 4, wobei
der Betätigungsdetektor (53) einen Berührungssensor umfasst, der auf dem Drehkörper (51) angeordnet ist, und
die Positionsumwandlungseinheit (61) dazu eingerichtet ist, den Koordinatenwert der vom Berührungssensor detektierten berührten Position auf einer Grundlage des Drehwinkels umzusetzen.

6. Die Betätigungsvorrichtung (3) gemäß einem der Ansprüche 1 bis 5, wobei
eine Vielzahl der virtuellen Betätigungsbereiche (VA) auf dem Drehkörper (51) angeordnet sind, und
die Steuerung (57) dazu eingerichtet ist, die Betätigungsinformation entsprechend dem virtuellen Betätigungsbereich aus der Vielzahl der virtuellen Betätigungsbereiche (VA1 bis VA4), in dem die Berührungsbetätigung durchgeführt wird, zu übertragen.

7. Die Betätigungsvorrichtung (3) gemäß einem der Ansprüche 1 bis 6, ferner umfassend:
eine Modusumschalteinheit (60), die dazu eingerichtet ist, einen Betriebsmodus der Betätigungsvorrichtung (3) umzuschalten, wobei
die Steuerung (57) dazu eingerichtet ist, die dem Betriebsmodus entsprechende Betätigungsinformation zu übertragen.

8. Ein Wiedergabesystem (1) umfassend:
die Betätigungsvorrichtung (3) gemäß einem der Ansprüche 1 bis 7; und
eine Wiedergabevorrichtung (2), die dazu eingerichtet ist, Musikdaten wiederzugeben, wobei die Wiedergabevorrichtung (2) dazu eingerichtet ist, einen akustischen Effekt auf die aktuell wiedergegebenen Musikdaten auf der Grundlage der von der Betätigungsvorrichtung (3) empfangenen Betätigungsinformation anzuwenden.

## Revendications

1. Dispositif d'opération (3) comprenant :
un corps rotatif (51) placé sur un plateau tournant (RP1) et pouvant tourner avec le plateau tournant (RP1) ; le plateau tournant (RP1) est configuré pour tourner à l'aide d'un moteur ;
une zone d'opération virtuelle (VA) définie sur le corps rotatif (51) et qui est une zone virtuelle dont une position dans le corps rotatif (51) est la même indépendamment du fait que le corps rotatif (51) est amené à tourner ou n'est pas amené à tourner ;
un détecteur d'opération (53) prévu sur le corps rotatif (51) et configuré pour détecter une valeur de coordonnée d'une position touchée qui est une position où une opération tactile est effectuée sur le corps rotatif (51) ; et
un contrôleur (57) configuré pour transmettre des informations d'opération prédéterminées lorsque la valeur de coordonnée de la position touchée détectée par le détecteur d'opération (53) est une position correspondant à une plage de la zone d'opération virtuelle (VA) dans le corps rotatif (51).

2. Le dispositif d'opération (3) selon la revendication 1, dans lequel
la zone d'opération virtuelle (VA) est définie correspondant à une partie d'une circonférence centrée sur un axe de rotation du corps rotatif (51).

3. Le dispositif d'opération (3) selon la revendication 1 ou 2, comprenant en outre :
un détecteur de rotation (RD) configuré pour détecter un angle de rotation du corps rotatif (51) par rapport à une direction de référence, dans lequel
le contrôleur (57) comprend :
une unité de conversion de position (62) configurée pour convertir la valeur de coordonnée de la position touchée détectée par le détecteur d'opération (53) en une valeur de coordonnée dans le corps rotatif (51) avant rotation sur la base de l'angle de rotation détecté par le détecteur de rotation (RD) au moment où l'opération tactile est effectuée ; et
une unité de transmission (64) configurée pour transmettre les informations d'opération dans un cas où la valeur de coordonnée convertie par l'unité de conversion de position (62) se trouve dans la zone d'opération virtuelle (VA) dans le corps rotatif (51) avant rotation, les informations d'opération comprenant des informations indiquant que l'opération tactile est effectuée sur la zone d'opération virtuelle (VA).

4. Le dispositif d'opération (3) selon la revendication 3, comprenant en outre :
un indicateur (52) prévu sur le corps rotatif (51) et configuré pour indiquer une position de la zone d'opération virtuelle (VA) ; et
une unité de contrôle d'indication (59) configurée pour amener l'indication de la zone d'opération virtuelle (VA) dans l'indicateur (52) à se déplacer sur la base de l'angle de rotation détecté par le détecteur de rotation (RD).

5. Le dispositif d'opération (3) selon la revendication 3 ou 4, dans lequel
le détecteur d'opération (63) comprend un capteur tactile prévu sur le corps rotatif (51), et
l'unité de conversion de position (61) est configurée pour convertir la valeur de coordonnée de la position touchée détectée par le capteur tactile sur la base de l'angle de rotation.

6. Le dispositif d'opération (3) selon l'une quelconque des revendications 1 à 5, dans lequel
une pluralité de zones d'opération virtuelles (VA) sont prévues sur le corps rotatif (51), et le contrôleur (57) est configuré pour transmettre les informations d'opération correspondant, parmi la pluralité de zones d'opération virtuelles (VA1 à VA4), à la zone d'opération virtuelle où l'opération tactile est effectuée.

7. Le dispositif d'opération (3) selon l'une quelconque des revendications 1 à 6, comprenant en outre :
une unité de commutation de mode (60) configurée pour commuter un mode d'opération du dispositif d'opération (3), dans lequel
le contrôleur (57) est configuré pour transmettre les informations d'opération correspondant au mode d'opération.

8. Système de lecture (1) comprenant :
le dispositif d'opération (3) selon l'une quelconque des revendications 1 à 7 ; et
un dispositif de lecture (2) configuré pour lire des données musicales, le dispositif de lecture (2) étant configuré pour appliquer un effet acoustique aux données musicales lues actuellement sur la base des informations d'opération reçues du dispositif d'opération (3).
